# FASCICULE DE BREVET EUROPEEN

(11) **EP 2 849 404 B1**
(45) Date de publication et mention de la délivrance du brevet: **11.12.2019**
(21) Numéro de dépôt: 14179540.1
(22) Date de dépôt: 01.08.2014
(51) Int. Cl.: H04L 29/06, G06F 16/951, H04L 12/58

(54) **Procédé de détection d'intrusions non solliciteés dans un reseau d'information, dispositif, produit programme d'ordinateur et moyen de stockage correspondants**
Detektionsverfahren von ungewünschten Eingriffen in ein Informationsnetz, entsprechende Vorrichtung, entsprechendes Computerprogrammprodukt und entsprechendes Speichermittel
Method for detecting unrequested intrusions in an information network, corresponding device, computer program product and storage means

(30) Priorité: 28.08.2013 FR 1301993
(43) Date de publication de la demande: 18.03.2015
(73) Titulaire: Airbus CyberSecurity SAS, 78990 Elancourt (FR)
(72) Inventeur: Loriot, Nicolas, 78120 RAMBOUILLET (FR); Fontarensky, Ivan, 78120 RAMBOUILLET (FR)
(74) Mandataire: Gevers & Orès

(56) Documents cités:
- US-A1- 2007 208 822
- US-A1- 2008 077 995
- US-A1- 2008 126 493
- US-A1- 2008 222 177

## Description

### 1. Domaine technique de l'invention

Le domaine technique de l'invention est celui des procédés et systèmes de détection d'intrusions non sollicitées dans un réseau d'information, notamment un réseau informatique. En particulier, l'invention concerne les méthodes de détection des attaques ciblées du type « Menaces Persistantes Avancées », plus connues sous la dénomination anglaise de *Advanced Persistent Threads* ou sous l'acronyme APT.

### 2. Arrière-plan technologique

Dans tout le texte qui suit, les termes « attaque ciblée » et « intrusion non sollicitée » sont utilisés pour définir la même pratique qui consiste à pénétrer dans un réseau d'information sans autorisation de son responsable.

Dans tout le texte, les termes « réseau d'information » désignent un réseau d'échanges d'information par tous types de moyens de communication, tel que par exemple un réseau Ethernet, un réseau radio, etc. Un tel réseau d'information est par exemple un réseau informatique, un réseau radio, un réseau radio mobile professionnel (plus connu sous l'acronyme PMR), et de manière générale un réseau reliant entre eux un ensemble d'équipements pour échanger des informations. Un réseau d'information désigne à la fois un ensemble de machines reliées entre elles pour échanger des informations qu'une machine individuelle. En d'autres termes, un procédé de détection d'intrusions non sollicitées dans un réseau d'information selon l'invention, notamment un réseau informatique, vise à la fois la détection d'intrusions sur un réseau formé de plusieurs machines reliées entre elles que la détection d'intrusions sur une machine unique recevant des informations, soit par l'intermédiaire d'un réseau du type Internet, Ethernet, Radio ou équivalent, soit par le branchement d'un dispositif de stockage d'informations telle qu'une clé USB, un disque de stockage, une antenne radio, etc.

Les attaques ciblées représentent une menace très importante pour toutes les organisations, qu'il s'agisse d'administrations publiques, d'entreprises privées ou d'organes gouvernementaux. Une telle attaque ciblée ou intrusion non sollicitée vise en général soit à collecter des informations sensibles de toute nature (secrets industriels, informations politiques sensibles, données bancaires, etc.), soit à prendre le contrôle total du réseau d'information, notamment du réseau informatique, d'une organisation. Il s'agit souvent d'une attaque silencieuse qui s'étale dans le temps et dont il est parfois difficile de mesurer toutes les conséquences. Ces attaques émanent de groupes d'individus coordonnés, organisés, financés qui ciblent les actifs de grande valeur. La principale difficulté pour détecter ces attaques ciblées réside dans le fait que ces groupes se concentrent sur des attaques lentes et discrètes, passent d'un hôte à l'autre, sans générer de trafic réseau régulier ou prévisible, et mettent en place des procédures pour s'assurer que leurs actions ne soient pas remarquées par les opérateurs légitimes des systèmes. Pour ce faire, ils utilisent tout un panel d'outils, allant de l'utilisation de logiciels malveillants aux techniques d'ingénierie sociale, en passant par l'hameçonnage d'informations spécifiques de certains individus cibles.

Les mesures de défense traditionnelles contre ce type d'attaque, dans le cas d'un réseau informatique, consistent à utiliser des firewalls, des systèmes de prévention d'intrusion, des anti-virus et des outils de surveillance du réseau informatique de l'entité considérée. Ces techniques sont souvent imparfaites à tel point qu'il est fréquent que les attaques élaborées ne soient pas détectées avant 400 jours de présence sur le réseau attaqué.

Parmi les techniques utilisées pour les mesures de défense, le document US 2008/126493 décrit un dispositif et un procédé de détection de fichiers malveillants au sein de courriels. Le document US 2008/0222177 décrit un dispositif et un procédé de détection de virus dans un répertoire d'un ordinateur. Le document US 2007/0208822 décrit un procédé pour tester des sites internet et déterminer si une visite de ces sites est susceptible de générer une intrusion non sollicitée.

Un autre inconvénient de ces mesures traditionnelles est que si elles permettent d'identifier des événements individuels, elles n'associent pas les événements entre eux, interdisant ainsi une analyse globale des attaques du réseau.

Un autre inconvénient des mesures actuelles est qu'elles ne permettent pas de traiter rapidement les quantités de données véhiculées par les réseaux d'information, notamment les réseaux informatiques.

Il existe donc un réel besoin de disposer d'une méthode de détection d'intrusions non sollicitées dans un réseau qui permette de traiter rapidement un grand nombre de données en vue de fournir une vue globale de la situation du réseau et de déceler rapidement la présence d'intrusions non sollicitées, pour les éradiquer avant qu'elles ne mettent en péril l'organisation ciblée.

### 3. Objectifs de l'invention

L'invention vise à pallier au moins certains des inconvénients des procédés de détection d'intrusions non sollicitées dans un réseau d'information, notamment un réseau informatique.

En particulier, l'invention vise aussi à fournir, dans au moins un mode de réalisation de l'invention, un procédé de détection d'intrusions non sollicitées, qui permet de traiter un grand nombre de données de toute nature.

L'invention vise aussi à fournir, dans au moins un mode de réalisation, un procédé qui lie entre elles les différentes détections d'intrusions non sollicitées décelées.

L'invention vise aussi à fournir, dans au moins un mode de réalisation de l'invention, un procédé qui permet d'obtenir à un instant t, l'état du traitement en cours.

L'invention vise aussi à fournir, dans au moins un mode de réalisation, un procédé qui ne nécessite pas une interrogation du réseau étudié (et donc potentiellement corrompu) pour récupérer des données additionnelles.

L'invention vise aussi à fournir, dans au moins un mode de réalisation, un procédé qui fournit un rapport lisible par un opérateur humain et directement exploitable.

L'invention vise également, selon différents aspects de l'invention, à fournir un dispositif, un produit programme d'ordinateur et un moyen de stockage correspondants.

### 4. Exposé de l'invention

Pour ce faire, l'invention concerne un procédé de détection d'intrusions non sollicitées dans un réseau d'information comprenant une étape de réception d'une pluralité de données brutes issues de ce réseau, caractérisé en ce qu'il comprend pour chaque donnée brute reçue:
- une étape d'attribution d'au moins un moteur de recherche d'un indice d'intrusion adapté pour traiter ce type de donnée brute,
- une étape de traitement(s) de cette donnée brute, en parallèle par chaque moteur de recherche attribué à cette donnée brute, chaque moteur de recherche étant configuré pour chercher dans ladite donnée au moins un indice d'intrusion, et extraire d'éventuelles nouvelles données à analyser, dites données dérivées, potentiellement corrompues,
- une étape de renvoi de chaque donnée dérivée en tant que nouvelle donnée brute vers ladite étape d'attribution, si cette donnée dérivée n'a pas déjà été traitée par ledit(lesdits) même(s) moteur(s) de recherche attribué(s) à cette donnée, de manière à assurer une analyse récursive de chaque donnée brute issue du réseau.

Dans tout le texte qui suit, les termes « donnée brute » ou « donnée dérivée » désignent un ensemble de codes numériques adaptés pour pouvoir être directement interprétés par une machine, tel qu'un ordinateur. En d'autres termes, il s'agit de n'importe quelle information numérisée véhiculée par un réseau informatique créé par un utilisateur, un programme ou une machine. Typiquement, il s'agit d'un document textuel, image, audio, vidéo, d'un document comprimé, d'un document de visualisation tridimensionnelle, d'un programme exécutable, d'un fichier machine, d'un fichier historique, d'une base de données, d'une adresse URL, une adresse URI, une adresse IP, un nom de domaine, etc.

Un procédé selon l'invention permet d'analyser de manière récursive toutes les données issues du réseau et notamment les données encapsulées dans une autre donnée. Un procédé selon l'invention peut donc analyser en détail toutes les données issues du réseau et récupérer tous les indices d'attaques du réseau.

En outre, un procédé selon l'invention soumet chaque donnée à un moteur de recherche spécifiquement adapté au type de la donnée, soit pour en extraire une autre donnée, soit pour récupérer un indice que la donnée est une donnée non sollicitée et représente un danger pour la sécurité du réseau.

Les moteurs de recherche peuvent être de tous types, tels que des outils de décompression, des outils de déchiffrement, des outils « bacs à sable » plus connus sous leur dénomination anglaise de *sandbox,* qui permettent l'exécution de logiciels avec moins de risques pour le système d'exploitation, des analyseurs de logiciels malveillants tels que des antivirus, des analyseurs de réseaux, etc.

La récursivité de l'analyse à partir d'une donnée brute s'arrête uniquement lorsque chaque donnée dérivée fournie par chaque moteur de recherche a déjà été mise en évidence par un moteur de recherche identique. Cela signifie notamment que le même moteur de recherche a déjà permis de mettre en évidence la même donnée. Si la version du moteur de recherche est différente de celle utilisée pour la détection préalable de la donnée dérivée, la boucle récursive se poursuit. Cela permet par exemple, dans le cas d'un antivirus et d'une donnée du type fichier, de garantir que le fichier a déjà été analysé par la dernière version de l'antivirus. Si cette donnée a déjà été traitée, mais uniquement par une vieille version de l'antivirus, alors elle sera à nouveau analysée par la dernière version disponible. Cela permet par exemple de déceler un virus dans le fichier qui n'était pas présent dans la version antérieure de l'antivirus et donc non détectable avec la version précédente de l'antivirus, quand bien même le fichier avait déjà été décelé.

Dans tout le texte, l'analyse complète d'une donnée fait référence au passage de la donnée par au moins les étapes successives d'attribution des moteurs de recherche, de traitement(s) de la donnée par les moteurs de recherche et de renvoi des données dérivées vers l'étape d'attribution. Sauf mention contraire, les termes de « traitement de la donnée » correspondent aux étapes spécifiques de traitement(s) de cette donnée par les moteurs de recherches attribués. En revanche, l'analyse de la donnée correspond à la succession d'étapes, y inclus les étapes de traitement. Le terme « analyse » est donc utilisé pour définir l'ensemble du processus auquel est soumis la donnée alors que le terme « traitement » est utilisé pour évoquer l'extraction d'information par les moteurs de recherche.

Un procédé selon l'invention permet donc d'analyser automatiquement un grand nombre de données, en ayant toujours la garantie que les données sont traitées avec les dernières versions disponibles des moteurs de recherche utilisés.

Un procédé selon l'invention permet une analyse automatisée et rapide de toutes les données issues du réseau. Il permet donc de déceler rapidement la présence de données non sollicitées sur le réseau, autorisant les équipes de sécurité d'agir rapidement pour mettre en place les mesures correctives nécessaires.

Avantageusement, un procédé selon l'invention comprend une étape de communication de chaque indice d'intrusion et chaque donnée dérivée fournis par chaque moteur de recherche au cours de ladite étape de traitement(s). Chaque donnée dérivée et chaque indice d'intrusion sont communiqués à un module, dit ci-après, module administrateur. Cela permet à ce module administrateur notamment de piloter le procédé de détection en ayant une connaissance du résultat de chaque traitement de chaque donnée analysée, et donc de conditionner les étapes suivantes de l'analyse. Cela permet également de lier entre elles différentes détections d'intrusions non sollicitées.

Avantageusement, un procédé selon l'invention comprend une étape de création d'un rapport, dit rapport individuel, dans lequel les résultats des traitements par les moteurs de recherche sont ultérieurement sauvegardés conjointement avec une identification des moteurs de recherche attribués.

Cela permet de sauvegarder les résultats dans des rapports qui sont ultérieurement exploitables soit pour piloter le procédé de détection, soit pour lier entre elles les différentes détections, soit pour fournir à un instant t l'état du procédé de détection.

Avantageusement, la création de chaque rapport individuel est réalisée par le même module que le module auquel sont communiqués les résultats des traitements, autrement dit ledit module administrateur.

Selon cette variante avantageuse, un rapport individuel est créé pour chaque donnée analysée au cours de l'étape d'attribution. Les résultats des traitements par les moteurs de recherche attribués à cette donnée sont sauvegardés dans ce rapport individuel. Si une donnée dérivée est mise en exergue au cours d'un traitement par un moteur de recherche, cette donnée peut être renvoyée par l'étape de renvoi vers l'étape d'attribution et être assimilée à une nouvelle donnée brute, dans le cadre de l'analyse récursive. Aussi, un rapport individuel est créé par le module administrateur pour cette donnée dérivée, dans lequel les résultats des traitements par les moteurs de recherche attribués à cette donnée dérivée sont sauvegardés. Le mécanisme de création des rapports individuels se poursuit ainsi, pour chaque donnée brute initiale, jusqu'à la fin de l'analyse récursive pour cette donnée. Cela génère donc un arbre de rapports individuels, cet arbre contenant à chaque nœud le rapport individuel du traitement de la donnée considérée. Il est donc ultérieurement possible, en lisant l'arbre des rapports individuels de connaitre le mécanisme qui a permis de déceler une donnée dérivée et/ou un indice d'intrusion non sollicitée et ainsi de comprendre le mécanisme d'attaque mis en œuvre par l'attaquant.

Chaque rapport individuel créé par un procédé selon cette variante peut contenir une variété d'informations relatives aux traitements opérés par les moteurs de recherche attribués à cette donnée et à la donnée elle-même.

Avantageusement, chaque rapport individuel est créé de sorte à contenir une ou plusieurs des informations suivantes : date de la création du rapport individuel ; date des différents traitements réalisés sur la donnée ; nom et version de chaque moteur de recherche attribué à cette donnée ; nom de la donnée analysée, taille mémoire de la donnée analysée; code hash de la donnée ; source de la donnée.

Avantageusement, un procédé selon l'invention comprend une étape de compilation, pour chaque donnée brute issue du réseau, desdits rapports individuels en un rapport final lorsque l'analyse récursive de cette donnée brute est terminée.

Le rapport final permet d'accéder à l'arbre des rapports individuels et de savoir ce qui s'est passé à chaque étape de l'analyse.

Avantageusement, un procédé selon l'invention comprend une étape de sauvegarde de chaque rapport individuel et de chaque rapport final dans une base de sauvegarde.

Cela permet de constituer une base de connaissances des différents traitements réalisés par les moteurs de recherche. Cela permet également de lier entre elles des détections d'intrusions réalisées à des périodes différentes, ce qui permet par exemple de déterminer que des attaques distinctes proviennent de la même source.

Avantageusement, un procédé selon l'invention comprend une étape d'interrogation de ladite base de sauvegarde pour déterminer si une donnée dérivée a déjà été traitée par un moteur de recherche identique.

Un procédé selon cette variante interroge la base de sauvegarde pour déterminer si la donnée dérivée décelée par un moteur de recherche a déjà fait l'objet d'un traitement par un même moteur de recherche. Le recours à la base de sauvegarde permet donc un accès rapide et ordonné de l'ensemble des informations obtenues au cours des traitements précédents.

Avantageusement et selon l'invention, dans l'étape d'attribution, chaque moteur de recherche d'un indice d'intrusion est sélectionné parmi une pluralité prédéterminée de moteurs de recherche.

Une liste prédéterminée de moteurs de recherche est fournie, par exemple avant l'exécution du procédé et l'étape d'attribution sélectionne pour chaque type de donnée reçue, au moins un moteur de recherche adapté pour traiter cette donnée.

Cette liste de moteurs de recherche peut être mise à jour dès l'apparition, soit d'un nouveau type de donnée, soit d'un nouveau traitement possible à effectuer sur un type de donnée.

Avantageusement, un procédé selon l'invention comprend une étape de notification par un moteur de recherche spécifique, dit moteur par défaut, que ladite donnée ne peut être traitée si ladite donnée est d'un type non reconnu au cours de l'étape d'attribution.

Si l'étape d'attribution ne permet pas d'associer un moteur de recherche adapté pour traiter le type de donnée reçue (soit une donnée brute directement issue du réseau dont les données sont analysées, soit une donnée dérivée, issue d'un précédent traitement par un autre moteur de recherche), la donnée est transmise à un moteur de recherche par défaut qui ne fait que notifier que la donnée est d'un type non reconnu qu'il ne peut pas traiter. Un rapport est néanmoins créé au cours de l'étape de création et l'information selon laquelle la donnée ne peut être traitée est sauvegardée dans le rapport.

L'invention vise également un dispositif de détection d'intrusion non sollicitées dans un réseau d'information, notamment un réseau informatique, comprenant un module de réception des données brutes issues de ce réseau, caractérisé en ce qu'il comprend :
- une pluralité de moteurs de recherche d'un indice d'intrusion configurés pour chercher au sein d'au moins un type de donnée brute, au moins un indice d'attaque et extraire d'éventuelles nouvelles données à analyser, dites données dérivées, potentiellement corrompues,
- un module répartiteur adapté pour attribuer à chaque donné brute reçue par ledit module de réception, au moins un moteur de recherche de ladite pluralité de moteurs de recherche adapté pour traiter ce type de donnée brute,
- un module administrateur relié aux moteurs de recherche et au module répartiteur et configuré pour transmettre audit module répartiteur chaque donnée dérivée en tant que nouvelle donnée brute si elle n'a pas déjà été traitée par ledit(lesdits) même(s) moteur(s) de recherche, de manière à assurer une analyse récursive de chaque donnée brute reçue par ledit module de réception.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit*) ou un circuit logique programmable ou tout matériel équivalent. D'une manière générale, un module est donc un élément (logiciel et/ou matériel) qui permet d'assurer une fonction.

Selon l'invention, une pluralité de données brutes issues d'un réseau à analyser est reçue par un module de réception. Chaque donné est ensuite analysée par le module répartiteur pour affecter à cette donnée brute un ou plusieurs moteurs de recherche adapté pour traiter ce type de donnée brute. Les résultats de ces différents traitements sont ensuite transmis au module administrateur qui détermine si l'analyse récursive de cette donnée brute est terminée ou non. Si de nouvelles données dérivées doivent être analysées, ces données sont transmises au module répartiteur pour une réitération du processus d'analyse.

Les moteurs de recherche peuvent être de tous types. Ils peuvent comprendre des outils de décompression, des outils de déchiffrement, des outils « bacs à sable » plus connus sous leur dénomination anglaise de *sandbox,* des analyseurs de logiciels malveillants tels que des antivirus, des analyseurs de réseaux, etc. Ils peuvent se présenter sous la forme de produits matériels, de logiciels ou même de services offerts par un tiers.

De préférence, le module de réception des données issues du réseau à analyser et le module administrateur forment un et un seul module de tel sorte que c'est le module administrateur qui reçoit les données issues du réseau devant être analysées.

Le module répartiteur met avantageusement en œuvre l'étape d'attribution d'un procédé selon l'invention et l'étape d'attribution d'un procédé selon l'invention est avantageusement mise en œuvre par un module répartiteur selon l'invention.

Le module administrateur met avantageusement en œuvre l'étape de renvoi d'un procédé selon l'invention et l'étape de renvoi d'un procédé selon l'invention est avantageusement mise en œuvre par un module administrateur selon l'invention.

Avantageusement et selon l'invention, chaque moteur de recherche est configuré pour transmettre audit module administrateur chaque indice d'intrusion et chaque donnée dérivée qu'il a détectés.

Selon cette variante, c'est le module administrateur qui reçoit les résultats du(des) traitement(s). Il fait donc office de module de contrôle et de commande du dispositif car d'une part, il reçoit les données à analyser et d'autre part, il reçoit les résultats des traitements par les différents moteurs de recherche. Il est donc capable de déterminer si l'analyse récursive doit être poursuivie ou si cette donnée à été extensivement analysée.

Le module administrateur met avantageusement en œuvre l'étape de communication d'un procédé selon l'invention et l'étape de communication d'un procédé selon l'invention est avantageusement mise en œuvre par un module administrateur selon l'invention.

Avantageusement et selon cette variante, le module administrateur est configuré pour créer pour chaque donnée transmise au module répartiteur, un rapport de traitement, dit rapport individuel, dans lequel les résultats des traitements par lesdits moteurs de recherche transmis au module administrateur sont ultérieurement sauvegardés en combinaison avec l'identification des moteurs de recherche attribués.

Le module administrateur crée, selon cette variante, un rapport individuel pour chaque donnée transmise au module répartiteur.

Le module administrateur met avantageusement en œuvre l'étape de création d'un rapport individuel d'un procédé selon l'invention et l'étape de création d'un rapport individuel selon l'invention est avantageusement mise en œuvre par un module administrateur selon l'invention.

Avantageusement, un dispositif selon l'invention comprend un module de création d'un rapport final, pour chaque donnée brute issue du réseau, compilant les rapports individuels, une fois l'analyse récursive de cette donnée brute terminée.

Le module de création met avantageusement en œuvre l'étape de compilation des rapports individuels d'un procédé selon l'invention et l'étape de compilation des rapports individuels selon l'invention est avantageusement mise en œuvre par un module de création selon l'invention.

Avantageusement, un dispositif selon l'invention comprend une base de sauvegarde accessible par ledit module administrateur dans laquelle sont sauvegardés chaque rapport individuel et chaque rapport final.

Le module administrateur met avantageusement en œuvre l'étape d'interrogation de la base de sauvegarde d'un procédé selon l'invention et l'étape d'interrogation de la base de sauvegarde selon l'invention est avantageusement mise en œuvre par un module administrateur selon l'invention.

Selon une variante avantageuse de l'invention, la base de sauvegarde comprend en outre des informations relatives à des traitements de données brutes issues d'autres réseaux d'information faisant ainsi office de base de connaissance.

Selon cette variante, la base de sauvegarde comprend des informations qui proviennent par exemple d'analyses d'autres réseaux d'information ou d'analyses précédentes du même réseau d'information. Il est donc possible de faire des corrélations entre les différentes analyses et de caractériser les attaques décelées. Aussi, des informations de différentes attaques permettent de déterminer un profil d'un attaquant par exemple en regroupant des informations différentes, mais présentant entre elles un lien, comme par exemple, le même type de fichier corrompu décelé, ou une signature identique d'un attaquant, etc.

Avantageusement et selon l'invention, le module de réception des données brutes n'est pas relié audit réseau d'information pour lequel la détection d'attaques ciblées est mise en œuvre.

De préférence, l'analyse complète des données brutes issues d'un réseau est réalisée tout en étant totalement déconnectée du réseau en question. Cela assure que les éventuels attaquants n'aient pas connaissance des recherches qui sont menées à leur encontre. L'idée est de rester le plus discret possible sur l'analyse qui est faite pour ne pas alerter les attaquants qu'une détection est en cours, ce qui permet ultérieurement de mieux contrer l'attaquant. Cela permet par exemple, à partir du moment où une détection d'une intrusion non sollicitée a été décelée, d'observer ce que fait l'attaquant, de déterminer ce qu'il cherche à extraire du réseau et éventuellement d'obtenir des informations sur l'attaquant pour le cerner et le mettre à jour. Aussi, aucune interrogation du réseau informatique étudiée n'est effectuée au cours de l'analyse des données issues du réseau.

Cela étant, selon d'autres variantes, l'analyse complète des données peut être faite en ligne et/ou en analysant le flux continu des données adressées au réseau.

Un dispositif selon l'invention peut présenter différentes architectures. Il peut s'agir d'une architecture distribuée ou d'une architecture autonome et indépendante.

Selon une variante avantageuse, le dispositif comprend une pluralité de machines distinctes, chaque machine logeant au moins un module du dispositif, les machines étant reliées les unes aux autres par l'intermédiaire d'au moins un réseau filaire et/ou sans fil.

L'invention vise également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en œuvre du procédé de détection d'intrusions non sollicitées d'un réseau informatique selon l'invention.

Un tel produit programme d'ordinateur peut par exemple être exécuté sur une machine unique pour analyser le contenu des données stockées sur cet ordinateur et déceler d'éventuelles intrusions non sollicitées.

L'invention vise également un moyen de stockage lisible par ordinateur, totalement ou partiellement amovible, stockant un programme d'ordinateur comprenant un jeu d'instructions exécutables par un ordinateur pour mettre en œuvre le procédé de détection d'intrusions non sollicitées d'un réseau d'information selon l'invention.

L'invention concerne également un procédé, un dispositif, un produit programme d'ordinateur et un dispositif de stockage caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique sous la forme d'étapes d'un procédé de détection d'intrusions non sollicitées selon un mode de réalisation de l'invention,
- la figure 2 est une vue schématique d'un dispositif de détection d'intrusions non sollicitées dans un réseau d'information selon un mode de réalisation de l'invention,
- la figure 3 est une vue schématique du principe de l'analyse récursive mis en œuvre dans un procédé et par un dispositif selon un mode de réalisation de l'invention,
- la figure 4 est une vue schématique de la succession d'étapes de création des rapports individuels mis en œuvre par un dispositif et dans un procédé de détection selon un mode de réalisation de l'invention,
- la figure 5 est une vue schématique sous la forme d'étapes d'un procédé selon un mode de réalisation de l'invention mises en œuvre par un module administrateur d'un dispositif selon un mode de réalisation de l'invention,
- la figure 6 est une vue schématique d'un dispositif de détection d'intrusions non sollicitées selon un mode de réalisation de l'invention dans lequel le traitement des données s'opère en étant déconnecté du réseau analysé,
- la figure 7 est une vue schématique d'un dispositif de détection d'intrusion non sollicitées selon un mode de réalisation de l'invention, dans lequel des moteurs de recherche d'un indice d'intrusion sont distribués sur différents sites de traitement.

### 6. Description détaillée d'un mode de réalisation de l'invention

Dans toute la description détaillée qui suit en référence aux figures, sauf indication contraire, un dispositif et un procédé de détection d'intrusions non sollicitées dans un réseau d'information selon l'invention sont décrits en prenant l'exemple d'un réseau d'information du type réseau informatique. Un tel réseau informatique permet le partage entre différents utilisateurs et/ou machines de données numériques de tous types, créées par des utilisateurs, des programmes ou machines (ordinateurs, téléphones portables, tablettes numériques, etc.). Il s'agit par exemple d'un document textuel, image, audio, vidéo, d'un document comprimé, d'un document de visualisation tridimensionnelle, d'un programme exécutable, d'un fichier machine, d'un fichier historique, d'une base de données, d'une adresse URL, une adresse URI, une adresse IP, un nom de domaine, etc.

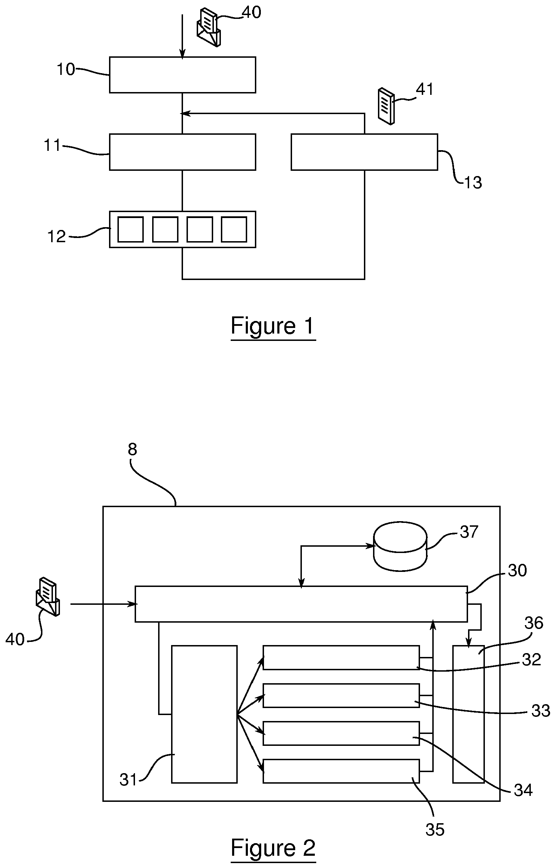

En référence à la figure 1, un procédé de détection d'intrusions non sollicitées dans un réseau d'information selon l'invention comprend une étape 10 de réception d'une pluralité de données brutes issues de ce réseau. Sur la figure 1, une donnée brute 40 reçue au cours de l'étape de réception est représentée comme étant courrier électronique (ci-après courriel) contenant des pièces jointes.

Un procédé selon l'invention comprend en outre, pour chaque donnée 40 brute, une étape 11 d'attribution d'au moins un moteur 32, 33, 34, 35 de recherche d'un indice d'intrusion adapté pour traiter ce type de donnée brute.

Dans le cas d'une donnée 40 brute du type courriel, les moteurs 32, 33, 34, 35 de recherche sont par exemple des antivirus adaptés pour déceler d'éventuels virus dans les pièces jointes du courriel, des outils de déchiffrement pour déchiffrer des données chiffrées en pièce jointe du courriel, des outils de décompression, etc.

D'une manière générale, les moteurs de recherche peuvent être de tous types, tels que des outils de décompression, des outils de déchiffrement, des *sandbox* des analyseurs de logiciels malveillants tels que des antivirus, des analyseurs de réseaux, etc. Les moteurs de recherche sont déterminés en fonction des données brutes à analyser. Si de nouvelles données apparaissent sur le réseau à analyser, de nouveaux moteurs de recherche peuvent être intégrés à l'invention pour permettre le traitement de ces nouvelles données. L'invention est décrite avec quatre moteurs de recherche distincts, mais il va de soi que le nombre de moteurs de recherche n'est pas limité à ce nombre. Selon un mode de réalisation de l'invention, les moteurs de recherche sont sélectionnés parmi une liste prédéterminée de moteurs de recherche.

Si la donnée à traiter est d'un type non reconnu, il y a une notification par un moteur de recherche attribué par défaut à cette donnée non reconnue que la donné ne peut être traitée.

Selon l'invention, un procédé comprend en outre une étape 12 de traitements de cette donnée 40 brute, en parallèle par chaque moteur 32, 33, 34, 35 de recherche attribué à cette donnée 40 brute.

Chaque moteur 32, 33, 34, 35 de recherche est configuré pour chercher dans cette donnée 40 au moins un indice d'intrusion et extraire d'éventuelles données 41 dérivées, potentiellement corrompues.

Un procédé selon l'invention comprend une étape 13 de renvoi de chaque donnée 41 dérivée en tant que nouvelle donnée brute vers l'étape d'attribution, si cette donnée dérivée n'a pas déjà été traitée par les mêmes moteurs de recherche attribués à cette donnée, de manière à assurer une analyse récursive de chaque donnée brute issue du réseau.

L'analyse est récursive et s'arrête uniquement lorsque plus aucune donnée dérivée n'est décelée ou lorsque les données dérivées mises en évidence ont déjà été traitées par des moteurs de recherche identiques. Les moteurs de recherche attribués à une donnée dérivée ne sont pas nécessairement les mêmes que les moteurs de recherche attribués à la donnée brute initiale. Cela dépend du type de donnée dérivée et du type de donnée brute initiale.

Un procédé selon le mode de réalisation de la figure 1 est avantageusement mis en œuvre par un dispositif selon la figure 2.

Un tel dispositif comprend un module 30 administrateur, un module 31 répartiteur et une pluralité de moteurs 32, 33, 34, 35 de recherche.

Le module 30 administrateur fait office de module de réception des données à analyser.

Les moteurs 32, 33, 34, 35 de recherche sont adaptés pour chercher au sein d'au moins un type de donnée brute, au moins un indice d'attaque et extraire d'éventuelles nouvelles données dérivées, potentiellement corrompues, à analyser.

Le module 31 répartiteur est adapté pour attribuer à chaque donnée brute reçue par le module 30 administrateur, au moins un moteur de recherche adapté pour traiter ce type de donnée brute.

Si la donnée à traiter par les moteurs de recherche est d'un type non reconnu, un moteur de recherche, dit moteur par défaut, est attribué à cette donnée.

Le module 30 administrateur fait office d'unité de pilotage et de commande du dispositif. C'est lui qui reçoit les données à analyser, qui les aiguille vers le module répartiteur. C'est aussi lui qui détermine si une éventuelle donnée dérivée décelée par un moteur de recherche doit être analysée à son tour ou pas.

Selon un mode de réalisation de l'invention, il comprend en outre un module 36 de création des rapports. Ce module crée les rapports individuels à l'issue de chaque traitement, sous l'impulsion du module administrateur, et le rapport final, à l'issue de l'analyse complète de la donnée.

Le module 30 administrateur sauvegarde les résultats des différents traitements dans une base 37 de sauvegarde.

La consultation de cette base de sauvegarde permet de connaitre l'état de l'analyse du réseau à un instant t, non seulement par les opérateurs effectuant l'analyse du réseau, mais également par des opérateurs analysant d'autres réseaux, la base 37 de sauvegarde faisant ainsi office de base de connaissance pour récupérer des informations d'attaques déjà décelées. Cela permet notamment de relier entre elles différentes détections afin de mieux caractériser un attaquant.

Selon le mode de réalisation de la figure 2, les différents modules sont des éléments logiciels.

Selon d'autres modes de réalisation, au moins certains modules peuvent être des sous-ensembles d'un programme logiciel, pouvant être compilés séparément. Ils peuvent aussi prendre la forme d'un élément matériel, ou une combinaison d'un élément matériel et d'un sous-programme logiciel.

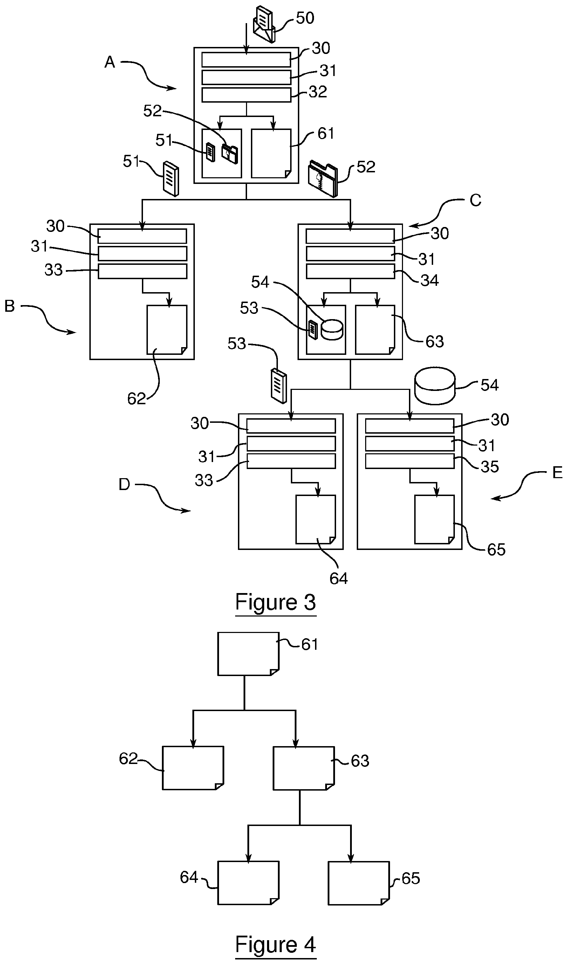

Sur la figure 3, le principe de l'analyse récursive est illustré à partir d'une donnée brute prenant la forme d'un courrier électronique 50 (ci-après courriel). A des fins d'illustration et de clarté, les modules utilisés au cours de l'analyse sont représentés pour chaque boucle récursive. L'analyse représentée sur la figure 3 compte cinq cycles, notés respectivement A, B, C, D et E.

Au cours du cycle A, le courriel 50 est reçu par le module 30 administrateur au cours de l'étape 10 de réception, puis transmis au module 31 répartiteur au cours de l'étape 11 d'attribution, qui le redirige vers un moteur 32 de recherche adapté pour traiter un courriel au cours de l'étape 12 de traitements. L'étape 12 de traitements met en évidence deux données dérivées, respectivement un fichier texte 51 et un fichier compressé 52 du type fichier « zip ». Ces deux données dérivées sont chacune renvoyée, au cours d'une étape 13 de renvoi, vers le module 30 administrateur pour subir un nouveau cycle d'analyse.

Au cours du cycle B d'analyse, le fichier texte 51 est examiné par le module 30 administrateur puis transmis au module 31 répartiteur. Le module 31 répartiteur attribue à ce fichier texte 51, au cours de l'étape récursive 11 d'attribution, le moteur 33 de recherche adapté pour traiter des fichiers textes. Selon le mode de réalisation représenté sur la figure 3, le moteur 33 de recherche ne décèle aucune nouvelle donnée dérivée au cours de l'étape 12 de traitement. En revanche, ce moteur de recherche peut avoir détecté un indice d'attaque, par exemple si le fichier contient un virus et si le moteur 33 de recherche est un antivirus. Dans l'hypothèse où aucune nouvelle donnée dérivée n'a été décelée par le moteur 33 de recherche et que ce moteur 33 de recherche est identique au moteur de recherche préalablement utilisé pour analyser un fichier texte, la boucle récursive pour ce fichier texte est terminée.

Au cours du cycle C d'analyse, le fichier compressé 52 est examiné par le module 30 administrateur puis transmis au module 31 répartiteur. Le module 31 répartiteur attribue à ce fichier compressé 52, au cours de l'étape récursive 11 d'attribution, le moteur 34 de recherche adapté pour traiter des fichiers compressés. Cette étape 12 de traitement par le moteur 34 de recherche met en évidence deux nouvelles données dérivées, respectivement un fichier texte 53 et une base de données 54. Ces deux nouvelles données sont donc à leur tour renvoyées vers le module 30 administrateur au cours d'une étape récursive de renvoi.

Au cours du cycle D d'analyse, le fichier texte 53 est examiné par le module 30 administrateur puis transmis au module 31 répartiteur. Le module 31 répartiteur attribue à ce fichier texte 53, au cours de l'étape récursive 11 d'attribution, le moteur 33 de recherche adapté pour traiter des fichiers textes. Dans le mode de réalisation de la figure 3, il s'agit du même moteur de recherche que celui utilisé au cours du cycle B car il s'agit d'un fichier texte de même type. Selon le mode de réalisation représenté sur la figure 3, le moteur 33 de recherche ne décèle aucune nouvelle donnée dérivée au cours de l'étape 12 de traitement. Dans l'hypothèse où aucune nouvelle donnée dérivée n'a été décelée par le moteur 33 de recherche et que ce moteur 33 de recherche est identique au moteur de recherche préalablement utilisé pour analyser un fichier texte, la boucle récursive pour ce fichier texte est terminée.

Enfin au cours du cycle E d'analyse, la base de données 54 est examinée par le module 30 administrateur puis transmise au module 31 répartiteur. Le module 31 répartiteur attribue à cette base de données 54, au cours de l'étape récursive 11 d'attribution, le moteur 35 de recherche adapté pour traiter des bases de données. Dans l'hypothèse où aucune nouvelle donnée dérivée n'a été décelée par le moteur 35 de recherche et que ce moteur 35 de recherche est identique au moteur de recherche préalablement utilisé pour analyser un fichier du même type, la boucle récursive pour cette donnée est terminée.

Ainsi, la donnée brute 50 est totalement analysée par les cycles successifs A, B, C, D et E qui ont permis de mettre en exergue les données dérivées 51, 52, 53, 54 et les éventuels indices d'attaques au cours des traitements par les différents moteurs de recherche. Comme indiqué précédemment, ces indices d'attaque sont par exemple des détections d'un virus par un logiciel antivirus.

Selon un mode avantageux de réalisation de l'invention, des rapports individuels sont créés pour contenir les résultats des traitements par les moteurs de recherche et l'identification des moteurs de recherche attribués à cette donnée.

Sur la figure 3, un rapport 61 est créé pour contenir les résultats de l'analyse du courriel 50 obtenus lors du cycle initial A d'analyse du courriel 50. Le fichier texte 51, dérivé du courriel 50 passe ensuite par les étapes successives de réception, d'attribution et de traitements. Les résultats de cette boucle B d'analyse sont sauvegardés dans un rapport 62. Le fichier compressé 52, dérivé du courriel 50, passe également par les étapes successives de réception, d'attribution et de traitements. Les résultats de cette boucle C d'analyse sont sauvegardés dans un rapport 63. Ces analyses ayant mis en évidence deux nouvelles dérivées, respectivement le fichier texte 53 et la base de données 54, chacune de ces nouvelles données passe par la boucle d'analyse. Les résultats de la boucle D d'analyse du fichier texte 53 sont sauvegardés dans un rapport 64 et les résultats de la boucle E d'analyse de la base de données sont sauvegardés dans un rapport 65.

Cela permet de générer un arbre de rapports tel que représenté sur la figure 4.

Lorsque l'analyse complète de la donnée est terminée, selon une variante avantageuse de l'invention, un rapport final compilant l'ensemble des rapports individuels est créé au cours d'une étape 25 de compilation. Chaque rapport individuel et le rapport final sont de préférence sauvegardés dans une base 37 de sauvegarde.

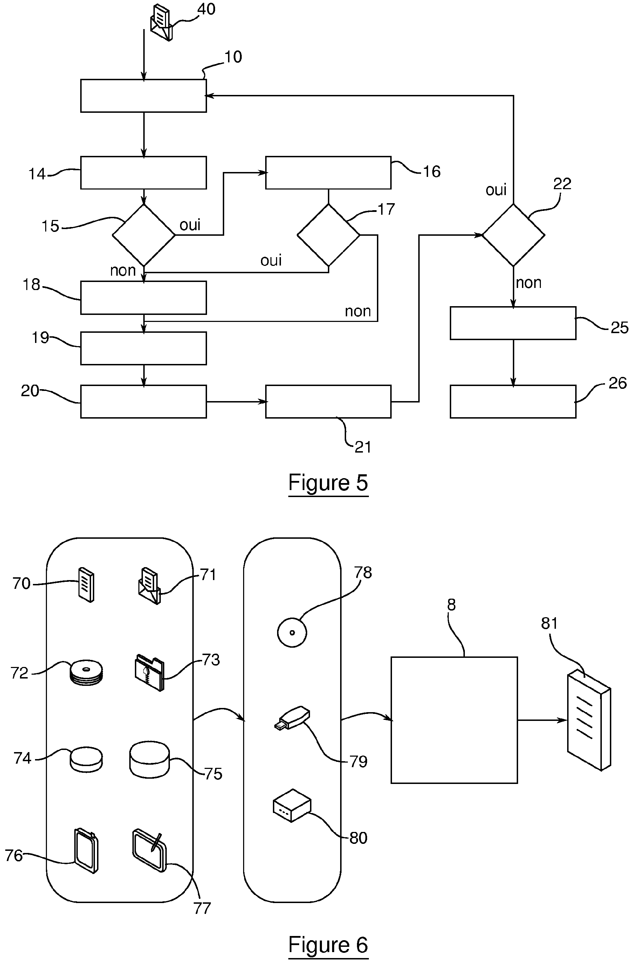

La figure 5 illustre les différentes étapes mises en œuvre dans un module 30 administrateur selon un mode préférentiel de réalisation de l'invention.

A l'étape 10, une donnée 40 à analyser est reçue. Un rapport individuel 60 est créé à l'étape 14 de création d'un rapport individuel. Ce rapport individuel 60 est complété ultérieurement, mais est créé dès la réception de la donnée 40 à analyser pour y indiquer par exemple l'heure de réception de la donnée et la provenance.

A l'étape 15 suivante, le module 30 administrateur détermine si la donnée 40 est connue. Pour ce faire, le module 30 administrateur consulte la base 37 de sauvegarde.

Si la donnée 40 est connue, le module 30 administrateur extrait de la base 37 de sauvegarde, au cours d'une étape 16, les rapports créés lors de la précédente analyse de cette donnée 40 pour en lister les différents moteurs de recherche utilisés précédemment pour traiter cette donnée 40. Si les moteurs de recherche ont été mis à jour, la donnée 40 est envoyée au module 31 répartiteur pour traitement. Si les moteurs de recherche n'ont pas été mis à jour, la donnée 40 ne sera pas traitée à nouveau et on passe directement à l'étape 19 d'interrogation de la base 37 de sauvegarde pour récupérer les résultats fournis par les moteurs de recherche.

Si la donnée 40 n'est pas connue, elle est envoyée au module 31 répartiteur au cours d'une étape 18 de transmission de la donnée au module 31 répartiteur.

Au cours d'une étape 19, les résultats des traitements par les différents moteurs de recherche sont récupérés par le module 30 administrateur.

Le rapport 60 individuel est mis à jour au cours d'une étape 20.

Ce rapport 60 est sauvegardé dans la base 37 de sauvegarde au cours d'une étape 21 de sauvegarde.

A l'étape 22, le module 30 administrateur détermine si une donnée dérivée a été mise en évidence. Si une donnée dérivée a été mise en évidence, alors elle est renvoyée vers l'étape 10 de réception pour analyse récursive de cette donnée dérivée. Selon le mode de réalisation de la figure 5, la fin de l'analyse récursive est déterminée par deux tests successifs disjoints. D'une part, il y a la détermination à l'étape 22 de l'existence d'une nouvelle donnée, et d'autre part, il y a la détermination d'un éventuel nouveau moteur de recherche à l'étape 17. Selon d'autres modes de réalisation, ces deux étapes sont concomitantes.

Si aucune nouvelle donnée n'est mise en évidence par les moteurs de recherches, un rapport final est créé à l'étape 25 de compilation des rapports individuels.

A l'étape 26, la base de sauvegarde 27 est mise à jour.

Un dispositif selon l'invention peut être physiquement relié au réseau informatique dont il analyse les données ou disjoint de ce dernier. Pour ce faire, le module 10 de réception reçoit les données soit directement du réseau analysé, soit par l'intermédiaire d'une base de données préalablement stockée sur un support d'archivé.

La figure 6 illustre un exemple de dispositif disjoint du réseau analysé. Un ensemble de données de différents types issues du réseau est stocké sur des supports d'archives. Sur la figure et à titre d'exemple uniquement non limitatif, les données sont représentées comme pouvant être des fichiers textes 70, des courriers électroniques 71, des fichiers systèmes 72, des archives compressées 73, des bases de données 74, des fichiers annuaires 75, des fichiers issus de téléphones portables 76 et des fichiers issus de tablettes numériques 77. Bien évidemment, tout autre type de fichier peut être pris en compte par un dispositif selon l'invention.

L'ensemble des ces données à analyser est ensuite stocké sur des supports d'archives tel qu'un disque optique 78, une clé USB 79 ou un disque dur externe 80. Bien entendu, d'autres types de supports peuvent être considérés.

Le dispositif 8 de détection d'intrusions non sollicitées analyse l'ensemble des données stockées sur les supports de stockage. En d'autres termes, le module de réception d'un dispositif selon l'invention est alimenté par les données issues de l'un ou l'autre de ces supports d'archives de manière à établir un rapport final 81 d'analyse de cet ensemble de données.

Selon d'autres modes de réalisation, l'analyse peut être effectuée en ligne.

Quel que soit le type d'analyse effectuée (en ligne ou déconnectée du réseau), l'analyse peut être locale ou être distribuée entre différents sites.

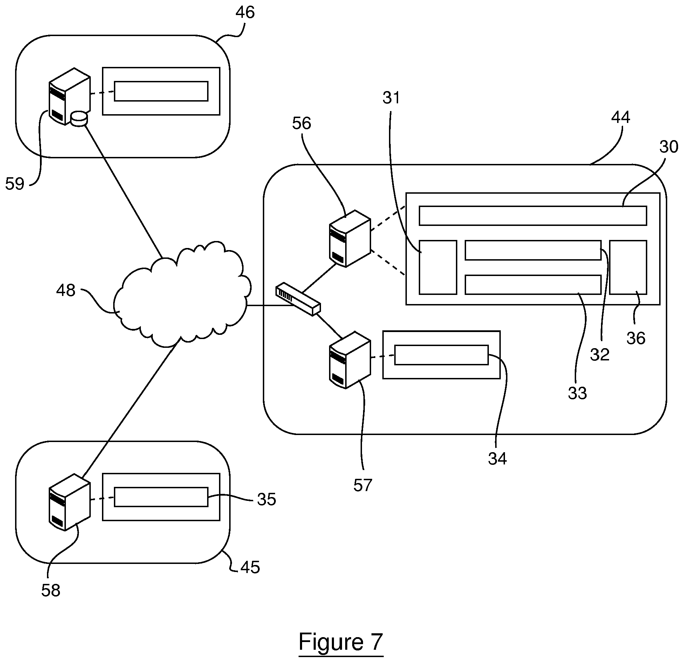

Par exemple, selon le mode de réalisation de la figure 7, l'analyse est distribuée entre trois localisations. Selon ce mode de réalisation, le module 30 administrateur est localisé sur une première machine 56 d'un premier site 44. Cette première machine 56 du premier site 44 héberge également le module 31 répartiteur, le module 36 de création des rapports et deux moteurs de recherche 32, 33. Sur ce même site 44 est hébergé par une seconde machine 57 un troisième moteur de recherche 34.

Selon le mode de réalisation de la figure 7, un troisième moteur de recherche 35 est hébergé par une machine 58 d'un deuxième site 45.

Selon le mode de réalisation de la figure 7, un troisième site 46 héberge la base de sauvegarde 37 sur une machine 57.

L'ensemble des sites sont reliés par un réseau tel que le réseau 48 Internet.

Selon d'autres modes de réalisation, les sites 44, 45, 46 sont reliés par un réseau sans fil.

Un procédé selon l'invention peut être mis en œuvre sous la forme d'une séquence d'instructions d'un programme informatique. Le procédé peut également être mis en œuvre sous forme matérielle ou sous une forme mixte matérielle et logicielle. Dans le cas où l'invention est implantée partiellement ou totalement sous la forme logicielle, la séquence d'instructions correspondante pourra être stockée dans un moyen de stockage amovible, tel qu'une disquette, un CD-ROM, un DVD-ROM, une clé USB, etc., ou un moyen de stockage non amovible, ces différents moyens étant lisibles partiellement ou totalement par un ordinateur ou par un microprocesseur.

L'invention ne se limite pas aux seuls modes de réalisation décrits. En particulier, selon d'autres modes de réalisation, le réseau d'information est un réseau du type PMR ou tout autre type de réseau véhiculant des informations et susceptibles de rencontrer des données malveillantes.

## Revendications

1. Procédé de détection d'intrusions non sollicitées dans un réseau d'information comprenant une étape (10) de réception d'une pluralité de données (40, 50) brutes issues de ce réseau, comprenant pour chaque donnée (40, 50) brute reçue :
- une étape (11) d'attribution d'au moins un moteur (32, 33, 34, 35) de recherche d'un indice d'intrusion adapté pour traiter ce type de donnée brute,
- une étape (12) de traitement de cette donnée brute, en parallèle par chaque moteur (32, 33, 34, 35) de recherche attribué à cette donnée (40, 50) brute, chaque moteur (32, 33, 34, 35) de recherche étant configuré pour chercher dans ladite donnée au moins un indice d'intrusion, et extraire d'éventuelles nouvelles données à analyser, dites données (41, 51, 52, 53, 54) dérivées, potentiellement corrompues,
- une étape (13) de renvoi de chaque donnée (41, 51, 52, 53, 54) dérivée en tant que nouvelle donnée brute vers ladite étape (11) d'attribution, si cette donnée dérivée n'a pas déjà été traitée par ledit même moteur de recherche attribué à cette donnée, de manière à assurer une analyse récursive de chaque donnée brute issue du réseau, **caractérisé en ce que** l'analyse récursive se poursuivant si ledit moteur de recherche a été mis à jour et présente une version différente de celle utilisée pour un traitement préalable de la donnée dérivée.

2. Procédé selon la revendication 1, **caractérisé en ce qu'**il comprend une étape de communication de chaque indice d'intrusion et chaque donnée dérivée fournis par chaque moteur (32, 33, 34, 35) de recherche au cours de ladite étape (12) de traitement.

3. Procédé selon l'une des revendications 1 ou 2, **caractérisé en ce qu'**il comprend une étape (25) de compilation, pour chaque donnée brute issue du réseau, desdits rapports (60, 61, 62, 63, 64, 65) individuels en un rapport final lorsque l'analyse récursive de cette donnée brute est terminée.

4. Procédé selon l'une des revendications 1 à 3, **caractérisé en ce que** dans ladite étape (11) d'attribution, chaque moteur de recherche d'un indice d'intrusion est sélectionné parmi une pluralité prédéterminée de moteurs de recherche.

5. Procédé selon la revendication 4, **caractérisé en ce qu'**il comprend une étape de notification par un moteur de recherche spécifique, dit moteur par défaut, que ladite donnée ne peut être traitée si ladite donnée est d'un type non reconnu.

6. Procédé selon l'une quelconque des revendications 1 à 5, **caractérisé en ce qu'**il comprend :
- une étape (14) de création d'un rapport, dit rapport (60, 61, 62, 63, 64, 65) individuel, dans lequel les résultats des traitements par les moteurs (32, 33, 34, 35) de recherche sont ultérieurement sauvegardés ainsi qu'une identification des moteurs de recherche attribués à la donnée dérivée, dont le nom et la version desdits moteurs de recherche,
- une étape (21, 26) de sauvegarde de chaque rapport individuel et de chaque rapport final dans une base de (37) sauvegarde,
- une étape (16, 19) d'interrogation de ladite base (37) de sauvegarde pour déterminer si une donnée dérivée a déjà été traitée par un moteur de recherche identique.

7. Procédé selon l'une quelconque des revendications 1 à 6, **caractérisé en ce qu'**au moins un des moteurs (32, 33, 34, 35) de recherche se présente sous la forme d'un outil de déchiffrement ou d'un outil de type « bac à sable ».

8. Dispositif de détection d'intrusion non sollicitées dans un réseau d'information comprenant un module de réception des données brutes issues de ce réseau, comprenant:
- une pluralité de moteurs (32, 33, 34, 35) de recherche d'un indice d'intrusion configurés pour chercher au sein d'au moins un type de donnée (40, 50, 70, 71, 72, 73, 74, 75, 76, 77) brute, au moins un indice d'attaque et extraire d'éventuelles nouvelles données à analyser, dites données (51, 52, 53, 54) dérivées, potentiellement corrompues,
- un module (31) répartiteur adapté pour attribuer à chaque donnée brute reçue par ledit module de réception, au moins un moteur (32, 33, 34, 35) de recherche de ladite pluralité de moteurs de recherche adapté pour traiter ce type de donnée brute,
- un module (30) administrateur relié aux moteurs (32, 33, 34, 35) de recherche et au module (31) répartiteur et configuré pour transmettre audit module (31) répartiteur chaque donnée dérivée en tant que nouvelle donnée brute si elle n'a pas déjà été traitée par ledit même moteur de recherche, de manière à assurer une analyse récursive de chaque donnée brute reçue par ledit module de réception,
**caractérisé en ce que** l'analyse récursive se poursuivant si ledit moteur de recherche a été mis à jour et présente une version différente de celle utilisée pour un traitement préalable de la donnée dérivée.

9. Dispositif selon la revendication 8 **caractérisé en ce que** chaque moteur (32, 33, 34, 35) de recherche est configuré pour transmettre audit module (30) administrateur chaque indice d'intrusion et chaque donnée dérivée qu'il a détectés.

10. Dispositif selon l'une quelconque des revendications 8 ou 9, **caractérisé en ce que** :
- le module (30) administrateur est configuré pour créer pour chaque donnée transmise au module (31) répartiteur, un rapport de traitement, dit rapport (61, 62, 63, 64, 65) individuel, dans lequel les résultats des traitements par lesdits moteurs de recherche transmis au module (30) administrateur sont ultérieurement sauvegardés en combinaison avec l'identification des moteurs (32, 33, 34, 35) de recherche attribués, dont le nom et la version desdits moteurs de recherche,
- le dispositif comprend une base (37) de sauvegarde accessible par ledit module (30) administrateur dans laquelle sont sauvegardés chaque rapport individuel et chaque rapport final,
- le module (30) administrateur est configuré pour interroger ladite base (37) de sauvegarde pour déterminer si une donnée dérivée a déjà été traitée par un moteur de recherche identique.

11. Dispositif selon l'une quelconque des revendications 8 à 10, **caractérisé en ce qu'**au moins un des moteurs (32, 33, 34, 35) de recherche se présente sous la forme d'un outil de déchiffrement ou d'un outil de type « bac à sable ».

12. Dispositif selon l'une des revendications 8 à 11, **caractérisé en ce qu'**il comprend un module (36) de création d'un rapport final, pour chaque donnée brute issue du réseau, compilant les rapports (61, 62, 63, 64, 65) individuels, une fois l'analyse récursive de cette donnée brute terminée.

13. Dispositif selon l'une des revendications 8 à 12, **caractérisé en ce qu'**il comprend une pluralité de machines (56, 57, 58, 59) distinctes, chaque machine logeant au moins un module du dispositif, les machines (56, 57, 58, 59) étant reliées les unes aux autres par l'intermédiaire d'au moins un réseau (48) filaire et/ou sans fil.

14. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé de détection d'attaques ciblées d'un réseau d'information selon au moins une des revendications 1 à 7, lorsque le programme est exécuté sur un ordinateur.

15. Moyen de stockage lisible par ordinateur, totalement ou partiellement amovible, stockant un programme d'ordinateur comprenant un jeu d'instructions exécutables par un ordinateur pour mettre en œuvre le procédé de détection d'attaques ciblées d'un réseau d'information selon au moins une des revendications 1 à 7.

## Patentansprüche

1. Detektionsverfahren von ungewünschten Eingriffen in ein Informationsnetz, umfassend einen Schritt (10) eines Empfangens einer Vielzahl von Rohdaten (40, 50) aus diesem Netz, umfassend für jedes empfangene Rohdatenelement (40, 50):
- einen Schritt (11) einer Zuweisung mindestens einer Suchmaschine (32, 33, 34, 35) für einen Eingriffsindex, die zum Verarbeiten dieses Typs von Rohdatenelement angepasst ist,
- einen Schritt (12) einer Verarbeitung dieses Rohdatenelements, parallel von jeder Suchmaschine (32, 33, 34, 35), die diesem Rohdatenelement (40, 50) zugewiesen ist, wobei jede Suchmaschine (32, 33, 34, 35) konfiguriert ist, um in dem Rohdatenelement mindestens einen Eingriffsindex zu suchen und etwaige neue zu analysierende Daten zu extrahieren, wobei die abgeleiteten Daten (41, 51, 52, 53, 54) möglicherweise beschädigt sind,
- einen Schritt (13) einer Rücksendung jedes abgeleiteten Datenelements (41, 51, 52, 53, 54) als neues Rohdatenelement an den Schritt (11) der Zuweisung, wenn dieses abgeleitete Datenelement nicht bereits von derselben Suchmaschine verarbeitet wurde, die diesem Datenelement zugewiesen ist, um eine rekursive Analyse jedes Rohdatenelements aus dem Netz sicherzustellen, **dadurch gekennzeichnet, dass** die rekursive Analyse fortgesetzt wird, wenn die Suchmaschine aktualisiert wurde und eine andere Version als die für eine vorherige Verarbeitung des abgeleiteten Datenelements verwendete aufweist.

2. Verfahren nach Anspruch 1, **dadurch gekennzeichnet, dass** es einen Schritt einer Kommunikation von jedem Eingriffsindex und jedem abgeleiteten Datenelement umfasst, die von jeder Suchmaschine (32, 33, 34, 35) während des Schritts (12) des Verarbeitens bereitgestellt werden.

3. Verfahren nach einem der Ansprüche 1 oder 2, **dadurch gekennzeichnet, dass** es einen Schritt (25) einer Kompilation, für jedes Rohdatenelement aus dem Netz, der Einzelberichte (60, 61, 62, 63, 64, 65) zu einem Abschlussbericht umfasst, wenn die rekursive Analyse dieses Rohdatenelements abgeschlossen ist.

4. Verfahren nach einem der Ansprüche 1 bis 3, **dadurch gekennzeichnet, dass** in dem Schritt (11) der Zuweisung jede Suchmaschine für einen Eingriffsindex aus einer vorbestimmten Vielzahl von Suchmaschinen ausgewählt wird.

5. Verfahren nach Anspruch 4, **dadurch gekennzeichnet, dass** es einen Schritt einer Benachrichtigung durch eine spezifische Suchmaschine, genannt Standardmaschine, umfasst, dass das Datenelement nicht verarbeitet werden kann, wenn das Datenelement von einem nicht erkannten Typ ist.

6. Verfahren nach einem der Ansprüche 1 bis 5, **dadurch gekennzeichnet, dass** es umfasst:
- einen Schritt (14) einer Erstellung eines Berichts, genannt Einzelbericht (60, 61, 62, 63, 64, 65), in dem die Ergebnisse der Verarbeitungen durch die Suchmaschinen (32, 33, 34, 35) anschließend gesichert werden, sowie eine Identifizierung der dem abgeleiteten Datenelement zugewiesenen Suchmaschinen, darunter der Name und die Version der Suchmaschinen,
- einen Schritt (21, 26) eines Sicherns jedes Einzelberichts und jedes Abschlussberichts in einer Sicherungsdatenbank (37),
- einen Schritt (16, 19) einer Abfrage der Sicherungsdatenbank (37), um zu bestimmen, ob ein abgeleitetes Datenelement bereits von einer identischen Suchmaschine verarbeitet wurde.

7. Verfahren nach einem der Ansprüche 1 bis 6, **dadurch gekennzeichnet, dass** mindestens eine der Suchmaschinen (32, 33, 34, 35) in Form eines Entschlüsselungswerkzeugs oder eines Werkzeugs vom "Typ "Sandbox" vorliegt.

8. Vorrichtung zur Detektion von ungewünschten Eingriffen in ein Informationsnetz, umfassend ein Modul zum Empfangen von Rohdaten aus diesem Netz, umfassend:
- eine Vielzahl von Suchmaschinen (32, 33, 34, 35) für einen Eingriffsindex, die konfiguriert sind, um innerhalb mindestens eines Typs von Rohdatenelement (40, 50, 70, 71, 72, 73, 74, 75, 76, 77) mindestens einen Angriffsindex zu suchen und etwaige neue zu analysierende Daten zu extrahieren, wobei die abgeleiteten Daten (51, 52, 53, 54) möglicherweise beschädigt sind,
- ein Verteilermodul (31), das angepasst ist, um jedem von dem Empfängermodul empfangenen Rohdatenelement mindestens eine Suchmaschine (32, 33, 34, 35) der Vielzahl von Suchmaschinen zuzuweisen, die angepasst ist, um diesen Typ von Rohdatenelement zu verarbeiten,
- ein Verwaltungsmodul (30), das mit den Suchmaschinen (32, 33, 34, 35) und dem Verteilermodul (31) verbunden ist und konfiguriert ist, um an das Verteilermodul (31) jedes abgeleitete Datenelement als neues Rohdatenelement zu übertragen, wenn es nicht bereits von derselben Suchmaschine verarbeitet wurde, um eine rekursive Analyse jedes vom Empfängermodul empfangenen Rohdatenelements sicherzustellen, **dadurch gekennzeichnet, dass** die rekursive Analyse fortgesetzt wird, wenn die Suchmaschine aktualisiert wurde und eine andere Version als die für eine vorherige Verarbeitung des abgeleiteten Datenelements verwendete aufweist.

9. Vorrichtung nach Anspruch 8, **dadurch gekennzeichnet, dass** jede Suchmaschine (32, 33, 34, 35) konfiguriert ist, um an das Verwaltungsmodul (30) jeden Eingriffsindex und jedes abgeleitete Datenelement, die sie erfasst hat, zu übertragen.

10. Vorrichtung nach einem der Ansprüche 8 oder 9, **dadurch gekennzeichnet, dass**:
- das Verwaltungsmodul (30) konfiguriert ist, um für jedes an das Verteilermodul (31) übertragene Datenelement einen Verarbeitungsbericht, genannt Einzelbericht (61, 62, 63, 64, 65), zu erstellen, in dem die Ergebnisse der Verarbeitungen durch die an das Verwaltungsmodul (30) übertragenen Suchmaschinen anschließend in Kombination mit der Identifizierung der zugewiesenen Suchmaschinen (32, 33, 34, 35), darunter der Name und die Version der Suchmaschinen, gesichert werden,
- die Vorrichtung eine Sicherungsdatenbank (37) umfasst, auf die das Verwaltungsmodul (30) Zugriff hat, in der jeder Einzelbericht und jeder Abschlussbericht gesichert sind,
- das Verwaltungsmodul (30) konfiguriert ist, um die Sicherungsdatenbank (37) abzufragen, um zu bestimmen, ob ein abgeleitetes Datenelement bereits von einer identischen Suchmaschine verarbeitet wurde.

11. Verfahren nach einem der Ansprüche 8 bis 10, **dadurch gekennzeichnet, dass** mindestens eine der Suchmaschinen (32, 33, 34, 35) in Form eines Entschlüsselungswerkzeugs oder eines Werkzeugs vom Typ "Sandbox" vorliegt.

12. Vorrichtung nach einem der Ansprüche 8 bis 11, **dadurch gekennzeichnet, dass** sie ein Modul (36) zur Erstellung eines Abschlussberichts umfasst, der, für jedes Rohdatenelement aus dem Netz, die Einzelberichte (61, 62, 63, 64, 65) kompiliert, sobald die rekursive Analyse dieses Rohdatenelements abgeschlossen ist.

13. Vorrichtung nach einem der Ansprüche 8 bis 12, **dadurch gekennzeichnet, dass** sie eine Vielzahl von getrennten Maschinen (56, 57, 58, 59) umfasst, wobei jede Maschine mindestens ein Modul der Vorrichtung aufnimmt, wobei die Maschinen (56, 57, 58, 59) über mindestens ein drahtgebundenes und/oder drahtloses Netz (48) miteinander verbunden sind.

14. Computerprogrammprodukt, das von einem Kommunikationsnetz herunterladbar ist und/oder auf einem computerlesbaren und/oder von einem Prozessor ausführbaren Medium aufgezeichnet ist, **dadurch gekennzeichnet, dass** es Programmcodeanweisungen für die Implementierung des Detektionsverfahrens gezielter Angriffe eines Informationsnetzes nach mindestens einem der Ansprüche 1 bis 7 umfasst, wenn das Programm auf einem Computer ausgeführt wird.

15. Computerlesbares, vollständig oder teilweise entfernbares Speichermittel, das ein Computerprogramm speichert, umfassend einen Satz von Anweisungen, die von einem Computer ausführbar sind, um das Detektionsverfahren gezielter Angriffe eines Informationsnetzes nach mindestens einem der Ansprüche 1 bis 7 zu implementieren.

## Claims

1. Method for detecting unwanted intrusions into an information network comprising a step (10) for receiving a plurality of pieces of raw data (40, 50) from this network,
comprising for each piece of raw data (40, 50) received:
- a step (11) for allocating at least one intrusion indicator search engine (32, 33, 34, 35) which is suitable for processing this type of piece of raw data,
- a step (12) for processing this piece of raw data, carried out in parallel by each search engine (32, 33, 34, 35) allocated to this piece of raw data (40, 50), each search engine (32, 33, 34, 35) being configured to search within said piece of data for at least one intrusion indicator and to extract potential new data to be analyzed, known as derived data (41, 51, 52, 53, 54), which may be corrupted,
- a step (13) for returning each piece of derived data (41, 51, 52, 53, 54) as a new piece of raw data to said step (11) for allocating, if this piece of derived data has not already been processed by the same search engine allocated to this piece of data, so as to provide recursive analysis of each piece of raw data from the information network,
**characterized in that** the recursive analysis continuing if said search engine has been updated and has a version different from the one used for a prior processing of the piece of derived data.

2. Method according to claim 1, **characterized in that** it comprises a step for communicating each intrusion indicator and each piece of derived data supplied by each search engine (32, 33, 34, 35) during said step (12) for processing.

3. Method according to one of claims 1 or 2, **characterized in that** it comprises a step (25) for compiling, for each piece of raw data received from the network, said individual reports (60, 61, 62, 63, 64, 65) in a final report when the recursive analysis of the piece of raw data has ended.

4. Method according to one of claims 1 to 3, **characterized in that**, during said step (11) for allocating, each intrusion indicator search engine is selected from a predetermined plurality of search engines.

5. Method according to claim 4, **characterized in that** it comprises a step for providing a notification by a specific search engine, known as search engine by default, that said piece of data cannot be processed if said piece of data is of an unknown type.

6. Method according to any one of claims 1 to 5, **characterized in that** it comprises:
- a step (14) for creating a report, known as individual report (60, 61, 62, 63, 64, 65), in which results of the processing operations by the search engines (32, 33, 34, 35) are subsequently saved along with an identity of the search engines allocated to the piece of derived date, including the name and the version of said search engines,
- a step (21, 26) for saving each individual report and each final report in a backup database (37),
- a step (16, 19) for interrogating said backup database (37) to determine whether a piece of derived data has already been processed by an identical search engine.

7. Method according to any one of claims 1 to 6, **characterized in that** at least one of the search engines (32, 33, 34, 35) is in the form of a decryption tool or a "sandbox" type tool.

8. Device for detecting unwanted intrusions into an information network comprising a module for receiving raw data from this network, comprising:
- a plurality of intrusion indicator search engines (32, 33, 34, 35) configured to search within at least one type of raw data (40, 50, 70, 71, 72, 73, 74, 75, 76, 77) for at least one attack indicator and to extract potential new data to be analyzed, known as derived data (51, 52, 53, 54) which may be corrupted,
- a distribution module (31) for allocating to each piece of raw data received by said receiving module, at least one search engine (32, 33, 34, 35) of said plurality of search engines which is suitable for processing this type of piece of raw data,
- an administrator module (30) linked to the search engines (32, 33, 34, 35) and to the distribution module (31) and configured to transmit each piece of derived data to said distribution module (31) as new piece of raw data if it has not already been processed by said same search engine, so as to provide recursive analysis of each piece of raw data received by said receiving module,
**characterized in that** the recursive analysis continuing if said search engine has been updated and has a version different from the one used for a prior processing of the piece of derived data..

9. Device according to claim 8, **characterized in that** each search engine (32, 33, 34, 35) is configured to transmit each intrusion indicator and each piece of derived data that it has detected to said administrator module (30).

10. Device according to any one of claims 8 or 9, **characterized in that**:
- the administrator module (30) is configured to create for each piece of data transmitted to the distribution module (31), a processing report, known as individual report (61, 62, 63, 64, 65), in which the results of the processing operations by said search engines transmitted to the administrator module (30) are subsequently saved in combination with the identity of the allocated search engines (32, 33, 34, 35), including the name and the version of said search engines,
- the device comprises a backup database (37) which can be accessed by said administrator module (30) in which each individual report and each final report are saved,
- the administrator module (30) is configured for interrogating said backup database (37) to determine whether a piece of derived data has already been processed by an identical search engine.

11. Device according to any one of claims 8 to 10, **characterized in that** at least one of the search engines (32, 33, 34, 35) is in the form of a decryption tool or a "sandbox" type tool.

12. Device according to one of claims 8 to 11, **characterized in that** it comprises a module (36) for creating a final report, for each piece of raw data from the network, compiling the individual reports (61, 62, 63, 64, 65), once the recursive analysis of this piece of raw data is ended.

13. Device according to one of claims 8 to 12, **characterized in that** it comprises a plurality of distinct machines (56, 57, 58, 59), each machine accommodating at least one module of the device, the machines (56, 57, 58, 59) being interconnected via at least one wired and/or wireless network (48).

14. A computer program product which can be downloaded from a communications network and/or recorded on a medium which can be read by computer and/or executed by a processor, **characterized in that** it comprises program code instructions for implementing the method of detecting targeted attacks on an information network according to at least one of the claims 1 to 7, when the program is executed on the computer.

15. Computer-readable storage medium, removable in whole or in part, storing a computer program comprising a set of instructions which can be executed by a computer to implement the method for detecting targeted attacks on an information network according to at least one of the claims 1 to 7.
